# EUROPEAN PATENT APPLICATION

(11) **EP 4 106 471 A1**
(43) Date of publication of application: **21.12.2022**
(21) Application number: 20918312.8
(22) Date of filing: 13.02.2020
(51) Int. Cl.: H04W 74/08, H04W 8/24

(54) **TERMINAL**

(71) Applicant: NTT DOCOMO, INC., Chiyoda-Ku Tokyo 100-6150 (JP)
(72) Inventor: OHARA, Tomoya, Tokyo 100-6150 (JP); TAKEDA, Daiki, Tokyo 100-6150 (JP); KUMAGAI, Shinya, Tokyo 100-6150 (JP)
(74) Representative: Hoffmann Eitle
(86) International application number: PCT/JP2020/005665
(87) International publication number: WO 2021/161481

(57) **Abstract**

A terminal including: a reception unit configured to receive configuration information for use in a random access procedure from a base station apparatus; and a transmission unit configured to transmit information indicating an attribute of the terminal to the base station apparatus in the random access procedure based on the configuration information.

## Description

### [Technical Field]

The present invention relates to a terminal in a wireless communication system.

### [Background Art]

In the 3rd Generation Partnership Project (3GPP), a wireless communication system (hereinafter referred to as "NR") called 5G or NR (New Radio) is being studied in order to realize further increase of system capacity, further increase of data transmission speed, and further decrease of delay in radio sections. In 5G, various wireless technologies and network architectures are being studied (e.g., Non-Patent Document 1) in order to achieve a throughput of 10 Gbps or higher and to satisfy the requirement that the delay in radio sections should be 1 ms or less.

In addition, in the standardization (3GPP RAN Rel-17), new device types with lower cost and complexity than eMBB/URLC devices have been investigated as Reduced Capability NR devices (sometimes called NR-light UE). The device (user terminal) is referred to herein as "Reduced Capability UE".

### [Prior art documents]

### [Non-patent document]

[Non-Patent Document 1] 3GPP TS 38. 300 V15. 8. 0 (2019-12)
[Non-Patent Document 2] 3GPP TS 38. 321 V15. 8. 0 (2019-12)
[Non-Patent Document 2] 3GPP TS 38. 331 V15. 8. 0 (2019-12)

### [Summary of Invention]

### [Problem to be solved by the invention]

NR also defines a four-step random access procedure similar to LTE (Non-Patent Document 2). In addition, in NR, a random access procedure (called a two-step RACH) that is executed in two steps in order to reduce the delay and power consumption is being studied.

When the user terminal is the aforementioned Reduced Capability UE, the base station apparatus cannot know whether the user terminal is the Reduced Capability UE until the user terminal is in an RRC connected state and notifies the base station apparatus of the fact that the user terminal is the Reduced Capability UE as capability information (UE capacity). Accordingly, there is a problem in that the base station apparatus needs to perform operations for all UEs in accordance with, for example, the low-performance Reduced Capability UE. The above issues may arise for attributes not limited to Reduced Capability UE.

The present invention has been made in view of the above-described points, and an object of the present invention is to provide a technology that enables a user terminal to appropriately notify the base station apparatus of information representing an attribute of the user terminal.

### [Means for Solving Problems]

According to the disclosed technique, there is provided a terminal including: a reception unit configured to receive configuration information for use in a random access procedure from a base station apparatus; and a transmission unit configured to transmit information indicating an attribute of the terminal to the base station apparatus in the random access procedure based on the configuration information.

### [Effects of the Invention]

According to the disclosed technique, a technique that enables a user terminal to appropriately notify information representing an attribute of the user terminal to the base station apparatus is provided.

### [Brief Description of Drawings]

Fig. 1 is a diagram for explaining a wireless communication system according to an embodiment of the present invention;
Fig. 2 is a diagram for explaining a wireless communication system according to an embodiment of the present invention;
Fig. 3 is a diagram showing a four-step RACH;
Fig. 4 is a diagram showing a two-step RACH;
Fig. 5 is a diagram showing a basic operation example;
Fig. 6 is a diagram illustrating an example of a method for determining MsgA PO;
Fig. 7 is a sequence diagram according to Example 1;
Fig. 8 is a diagram showing an example of preamble index assignment in Example 1;
Fig. 9 is a diagram showing an example of preamble index assignment in Example 1;
Fig. 10 is a diagram showing an example of preamble index assignment in Example 1;
Fig. 11 is a diagram showing an example of preamble index assignment in Example 1;
Fig. 12 is a diagram showing an example of preamble index assignment in Example 1;
Fig. 13 is a diagram illustrating an example in which a position is specified by a frequency offset in Example 1;
Fig. 14 is a diagram illustrating an example in which a position is specified by a frequency offset in Example 1;
Fig. 15 is a diagram illustrating an example in which a position is specified by a frequency offset in Example 1;
Fig. 16 is a diagram illustrating an example in which a position is specified by a time offset in Example 1;
Fig. 17 is a sequence diagram according to Example 2;
Fig. 18 is a sequence diagram according to Example 3;
Fig. 19 is a sequence diagram according to Example 3;
Fig. 20 is a sequence diagram according to Example 4;
Fig. 21 is a sequence diagram of Example 5;
Fig. 22 shows an example of a functional configuration of the base station apparatus 10 according to an embodiment of the present invention;
Fig. 23 is a diagram showing an example of a functional configuration of a user terminal 20 according to an embodiment of the present invention;
Fig. 24 is a diagram illustrating an example of the hardware configuration of the base station apparatus 10 or the user terminal 20 according to an embodiment of the present invention.

### [Mode for Carrying Out the Invention]

Hereinafter, embodiments of the present invention will be described with reference to drawings. The embodiments described below are examples, and the embodiments to which the present invention is applied are not limited to the following embodiments. For example, the present embodiment mainly describes an example in which "Reduced Capability UE" is used as an attribute of the user terminal to be notified to the base station apparatus. However, the attribute of the user terminal to be notified to the base station apparatus is not limited to "Reduced Capability UE." For example, the maximum transmission power that the user terminal can output may be used.

The attribute (UE type) of the user terminal may be any of the following.

· Device shape type such as a wearable terminal;
· Type based on features of services such as URLLC, eMBB, mMTC (IoT) ;
· Service type such as sensor, VR device, AR device, etc.

In operation of a wireless communication system according to an embodiment of the present invention, existing techniques are used as appropriate. The existing technology is, for example, an existing NR or LTE, but is not limited to an existing NR or LTE.

Also, while terms used in existing NR or LTE specifications such as PUSCH, PDCCH, RRC, DCI, etc., are used in this specification, those represented by channel names, protocol names, signal names, function names, etc. used in this specification may be referred to by another name. In the following description, "time domain" and "frequency domain" may be replaced with "time region" and "frequency region" respectively.

### (System Configuration)

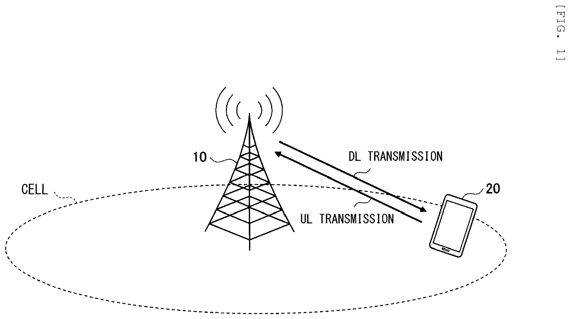

Fig. 1 is a diagram illustrating a wireless communication system according to an embodiment of the present invention. The wireless communication system in an embodiment of the present invention includes a base station apparatus 10 and a user terminal 20, as shown in FIG. 1. In FIG. 1, one base station apparatus 10 and one user terminal 20 are shown, but this is an example and a plurality of base station apparatuses 10 and a plurality of user terminals 20 may be provided.

The base station apparatus 10 is a communication apparatus that provides one or more cells and performs wireless communication with the user terminal 20. The physical resources of the radio signal are defined in the time domain and the frequency domain, the time domain may be defined in OFDM symbols, and the frequency domain may be defined in sub-carriers or resource blocks. The TTI (Transmission Time Interval) in the time domain may be a slot, or the TTI may be a subframe.

The base station apparatus 10 transmits a synchronization signal and system information to the user terminal 20. The synchronization signals are, for example, NR-PSS and NR-SSS. System information is transmitted, for example, by NR-PBCH or PDSCH, and is also called broadcast information. As shown in FIG. 1, the base station apparatus 10 transmits a control signal or data to the user terminal 20 by DL (Downlink) and receives a control signal or data by UL (Uplink) from the user terminal 20. Here, what is transmitted by a control channel such as PUCCH and PDCCH is called a control signal, and what is transmitted by a shared channel such as PUSCH and PDSCH is called a data. But, this is an example.

The user terminal 20 is a communication device having a wireless communication function such as a smartphone, a cellular phone, a tablet, a wearable terminal, a communication module for M2M (Machine-to-Machine), or the like. As shown in FIG. 1, the user terminal 20 utilizes various communication services provided by the wireless communication system by receiving a control signal or data in DL from the base station apparatus 10 and transmitting a control signal or data in UL to the base station apparatus 10. The user terminal 20 may be called a UE, and the base station apparatus 10 may be called a gNB. The user terminal 20 may also be referred to as a "terminal" or "UE".

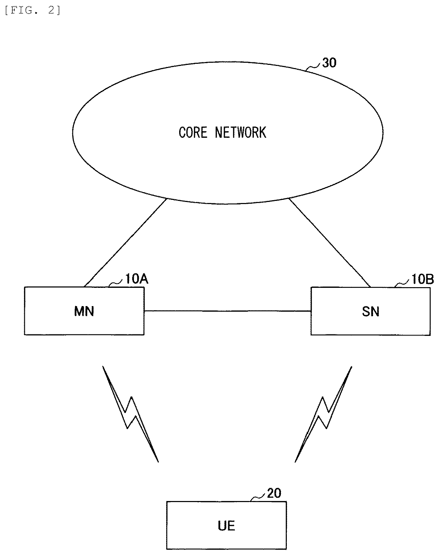

Fig. 2 shows an example of a configuration of a wireless communication system when DC (Dual connectivity) is executed. As shown in FIG. 2, a base station apparatus 10A serving as an MN (Master Node) and a base station apparatus 10B serving as an SN (Secondary Node) are provided. The base station apparatus 10A and the base station apparatus 10B are each connected to a core network. The user terminal 20 can communicate with both the base station apparatus 10A and the base station apparatus 10B.

The cell group provided by the base station apparatus 10A that is an MN is called an MCG (Master Cell Group), and the cell group provided by the base station apparatus 10B that is an SN is called an SCG (Secondary Cell Group).

The processing operation according to this embodiment may be performed in the system configuration shown in Fig. 1, in the system configuration shown in Fig. 2, or may be performed in other system configurations.

### (Random Access Procedures)

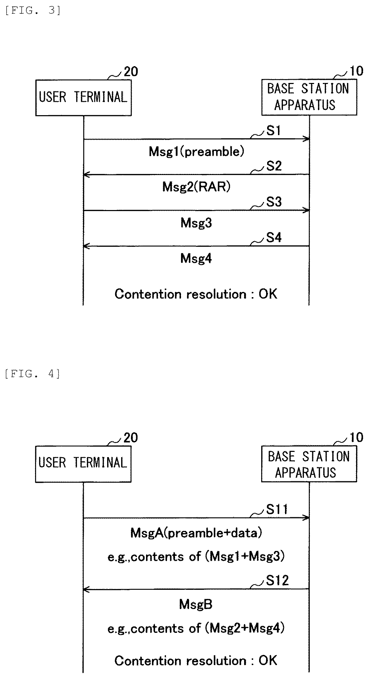

First, an example of a four-step random access procedure that can be performed in a wireless communication system according to this embodiment will be described with reference to Fig. 3. FIG. 3 illustrates, as an example, a CBRA (Contention based Random Access,, collision-type random access). The techniques of the present invention are also applicable to CFRA (Contention Free Random Access) procedures.

In NR, a random access procedure can be performed by selecting an SS/PBCH block (also called an SSB, also called a synchronization signal block or synchronization signal), or by selecting a CSI-RS (Channel State Information-Reference Signal).

The base station apparatus 10 transmits an SSB (or CSI-RS) for each beam, for example, and the user terminal 20 monitors an SSB (or CSI-RS) for each beam. The user terminal 20 selects from among a plurality of SSBs (or CSI-RS) an SSB (or CSI-RS) whose received power is greater than a predetermined threshold value and transmits a Message 1 (Msg1 (= RA preamble)) using a PRACH resource (RACH occasion) corresponding to the selected SSB (or CSI-RS). For convenience's sake, RA preamble is called preamble. Also, RACH occasion may be referred to as PRACH occasion. In addition, the term "RO" may refer to a term "RACH occasion "(PRACH occasion)".

When the base station apparatus 10 detects a preamble, it transmits a Message2 (Msg2 (= RAR)) which is a response to the preamble to the user terminal 20 (S2). The user terminal 20 that receives the Msg2 transmits a Message3 (Msg3) containing predetermined information to the base station apparatus 10 (S3).

The base station apparatus 10 that receives the Msg3 transmits a Message 4 (Msg4) to the user terminal 20 (S4). When the user terminal 20 confirms that the above predetermined information is contained in Msg4, it recognizes that the Msg4 is Msg4 addressed to itself corresponding to the above Msg3 (Content resolution: OK).

Since the above random access procedure consists of four steps, it is called four step RACH.

Next, a random access procedure (two-step RACH) in which the number of steps is reduced in order to reduce the delay and power consumption will be described with reference to Fig. 4. Fig. 4 shows, for example, a CBRA (Contention-based Random Access, collision type random access), but a two-step RACH can also be applied to a CFRA (Contention Free Random Access, non-collision type random access) . The techniques of the present invention may be applied to either CBRA or CFRA.

In S11, the user terminal 20 transmits a MessageA (MsgA) having a preamble and data to the base station apparatus 10. As an example, the user terminal 20 selects a PRACH resource in the same manner as selection of a PRACH resource in the four-step RACH and sends a preamble in the PRACH resource and transmits data in a PUSCH resource (referred to as PUSCH Occasion) associated with the PRACH resource. Note herein that the preamble and data correspond to Msg1 and Msg3, for example, in the four-step RACH.

In S12, the base station apparatus 10 transmits a MessageB (MsgB) to the user terminal 20. The content of MsgB corresponds to, for example, Msg2 and Msg4 in a four-step RACH.

Since the above random access procedure consists of two steps, this is called a two-step RACH. The two-step RACH is an example of a random access procedure that reduces the number of steps.

It is assumed that, at least in physical layer aspects, the preamble and the PUSCH are not integrated one in the two-step RACH. For example, it is assumed that, transmission messages in a preamble resource and a PUSCH resource that are separated physical resources are collectively called MsgA.

That is, one MsgA PUSCH occasion is a single MsgA PUSCH resource and one MsgA RACH occasion is a single MsgA preamble resource. "One resource" means a resource used for one transmission. MsgA PUSCH occasion and MsgA RACH occasion are called PUSCH occasion (abbreviated PO) and RACH occasion (abbreviated RO), respectively.

In the present embodiment, the RACH occasion is configured to the user terminal 20 by an RRC message (RACH config) . Meanwhile, with regard to PUSCH occasion, for example, a corresponding relationship between PUSCH occasion and RACH occasion is defined, and the user terminal 20 determines the PUSCH occasion based on the corresponding relationship.

The corresponding relationship between PUSCH occasion and RACH occasion may be one-to-one, one-to-one, one-to-many, or many-to-many.

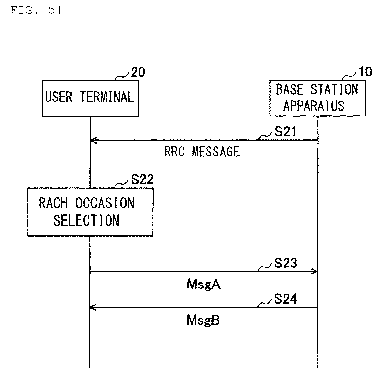

An operation example concerning resource designation of the PUSCH occasion will be described with reference to Fig. 5.

In S21, the base station apparatus 10 transmits an RRC message to the user terminal 20 for configuring one or more RACH concessions (which may be referred to as RACH resources). The RRC message may configure a relative position of a PUSCH occasion (also referred to as a PUSCH resource) with respect to the RACH occasion, or it may configure an absolute position of the PUSCH occasion. "RRC message" also includes broadcasting information (it may be called system information) such as SIB (System Information Block) . Configuration information (such as the relative position described above) for PUSCH occasion may be called MsgA PUSCH configuration.

The relative position of the PUSCH occasion relative to the RACH occasion may be configured from the base station apparatus 10 to the user terminal 20 by the MsgA PUSCH configuration, or it may be specified in the specification, etc., and the configuration from the base station apparatus 10 to the user terminal 20 may not be performed. The relative position being defined by the specification means that the user terminal 20 holds (preconfigured) the information of the relative position in a storage means such as a memory.

In S22, for example, the user terminal 20 selects one SSB having a received power greater than a threshold value from among a plurality of SSBs and determines a RACH occasion corresponding to the selected SSB. The determined RACH occasion is one of one or more of the RACH occasions configured in S21.

In S23, the user terminal 20 transmits a preamble using the RACH occasion specified in S102, and transmits data (e.g., Msg3) using a PUSCH occasion specified at a relative position (time offset or the like) from the RACH occasion to the base station apparatus 10. In S24, the user terminal 20 receives MsgB from the base station apparatus 10.

Here, an example of how to specify the location of the time domain resource of the PUSCH occasion will be described. That is, an example of how the user terminal 20 determines the location of the time domain resource of the PUSCH occasion will be described.

The user terminal 20 determines a position of time domain of a PUSCH occasion to be used for transmitting MsgA based on a relative position from a position (start or end position) of time domain of the RACH occasion corresponding to the PUSCH occasion.

For example, suppose the user terminal 20 specifies RACH occasion #1 as a RACH occasion corresponding to a selected SSB. The user terminal 20 knows the time domain resource of the RACH occasion #1 based on configuration made by the base station apparatus 10.

For example, if the start position of the RACH occasion #1 is symbol #0 of slot #1, and that the relative position (start position) of PUSCH occasion #1 to be used with the RACH occasion #1 for transmission of MsgA is "two slots after the start position of the RACH occasion #1," the user terminal 20 determines that a resource starting from symbol #0 of slot #3 is the resource of the PUSCH occasion #1 to be used with the RACH occasion #1 for transmission of MsgA.

As described above, the time length representing the above-described relative position (which may be referred to as a time offset) may be a value pre-configured to the user terminal 20 (that is, a value defined by a specification or the like) or a value configured from the base station apparatus 10 to the user terminal 20. This configuration can be done with an RRC message, MAC CE, or DCI.

As to each of a time length, a frequency position, and a frequency length (bandwidth) of a PUSCH occasion, the value may be a value pre-configured to the user terminal 20 (that is, a value defined by the specification or the like) or a value configured from the base station apparatus 10 to the user terminal 20. Also, as for a frequency position of a PUSCH occasion, it may be specified as a relative position (frequency offset) from the frequency position of the RACH occasion, like the time position.

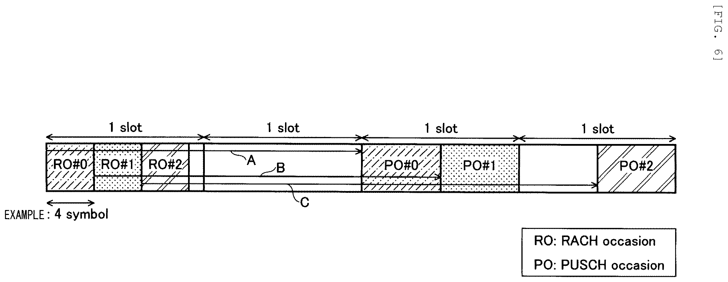

Referring to FIG. 6, an operation example of the user terminal 20 with respect to determination of a PUSCH occasion (PO) will be described. In FIG. 6, the position of a PO in time domain corresponding to a RO is specified as a time length from the start position of the RO to the start position of the PO.

For example, if the user terminal 20 selects RO #2 from among RO #0 to #2 based on received power of an SSB, the user terminal 20 determines a resource, as a resource of PO #2, having the start position after the time length indicated by C from the start position of RO #2. The slot where PO exists is called a MsgA PUSCH slot.

In the example of Fig. 6, for each of PO #0 to #2 corresponding to RO #0 to #2, the time length representing the relative position is specified or configured as A, B, and C, respectively. However, this is an example. A time length representing a common relative position for PO #0 to #2 may be specified or configured.

In the example of Fig. 6, PO #0 to #2 corresponding to RO #0 to #2 are arranged such that PO #0 to #2 do not overlap in the time direction. However, this is an example. For example, PO #0 and PO #1 may be in the same time position with the same time length and without overlapping in frequency positions. That is, PO #0 and PO #1 may be multiplexed by FDM (frequency division multiplexing). In this case, a frequency gap between PO #0 and PO #1 may be absent (i.e., continuous) or there may be a frequency gap between PO #0 and PO #1.

In the example shown in Fig. 6, a PUSCH occasion is specified by an offset with respect to a RACH occasion. This is an example. For example, a PUSCH slot may be specified by an offset with respect to a PRACH slot.

### (Problems)

As described above, in standardization (3GPP RAN Rel-17), Reduced Capability UE is being studied. The user terminal 20 according to the present embodiment is assumed to be a Reduced Capability UE (or an existing UE having a capability equivalent to the Reduced Capability UE) . However, the operation described in this embodiment is applicable to a normal UE that is not limited to Reduced Capability UE.

In Reduced Capability UE, functions such as UE Bandwidth reduction, Reduced number of UE RX/TX antennas, Half-Duplex-FDD, Relaxed UE processing time, Relaxed UE processing capacity, etc. are assumed. In other words, the Reduced Capability UE is a UE with reduced bandwidth, fewer transmission/reception antennas, and relaxed processing time, compared to a normal UE.

In order to explain the problems, a case in which the user terminal 20 and the base station apparatus 10 do not have a UE type notification function according to the present invention will be described.

Until the user terminal 20 is in an RRC connected state and notifies the base station apparatus 10 that the user terminal 20 is a Reduced Capability UE, the base station apparatus 10 cannot know whether the user terminal 20 is a Reduced Capability UE. For example, during random access, which is required beforehand to become an RRC connected state, the base station apparatus 10 cannot determine whether each user terminal is a Reduced Capability UE.

Therefore, for example, during random access, the base station apparatus 10 needs to configure scheduling, resource allocation, or the like according to the Reduced Capability UE as low requirements for all user terminals.

More specifically, if, for example, a user terminal of reduced UE bandwidth (e.g., a limited-bandwidth UE) can be present in a cell, the base station apparatus 10 needs to perform transmission with frequency resources such that the UE can perform reception within reduced UE bandwidth, primarily when performing transmission during random access, as illustrated below.
· PDCCH/PDSCH of Msg2, PDCCH/PDSCH of Msg4, and PDCCH/PDSCH before informing UE capability to the base station apparatus 10 and after Msg4, in 4-step random access.
· PDCCH/PDSCH of MsgB, and PDCCH/PDSCH before informing UE capability to the base station apparatus 10 and after MsgB, in 2-step random access.

The above-described example is an example of transmission from the base station apparatus 10, but the same applies to transmission (reception of the base station apparatus 10) from the user terminal 20.

In addition, for example, also similarly for elements other than bandwidth, such as Reduced number of UE RX/TX antennas and Relaxed UE processing time, it is necessary to define configuration and the like such that any user terminal can perform communication during random access. Hereinafter, examples 1 to 5 will be described as operation examples according to the present embodiment for solving the above-described problems. Examples 1-5 may be implemented in any combination unless there is a conflict.

### (Example 1)

In Example 1, when the user terminal 20 transmits Msg1 or when the user terminal 20 transmits MsgA preamble, the user terminal 20 notifies the base station apparatus 10 of information of its own UE type. That is, in Example 1, the user terminal 20 notifies the base station apparatus 10 of information of a UE type by transmitting a PRACH preamble (hereinafter, preamble). "Information of UE type" may be referred to as "UE type". A "UE type" may be referred to as an "Attribute".

The information of the UE type in Example 1 (and also in Examples 2-5) is, for example, information indicating whether or not the user terminal 20 is a Reduced Capability UE.

For example, if the user terminal 20 is a Reduced Capability UE, the information of the UE type is notified, and if the user terminal 20 is not a Reduced Capability UE (if the user terminal 20 is a normal UE), the information of the UE type may not be notified.

When there are multiple types of Reduced Capability UE, the type may be identified by information of UE type. For example, when UE type = 0 is used as a UE type of an existing UE, and there are three types of UE type = 1, 2, and 3 as UE types of the Reduced Capability UE, if the user terminal 20 has UE type = 2, the user terminal 20 notifies the base station apparatus 10 of "2" as the information of the UE type. As noted above, UE type information may indicate that the user terminal 20 is a UE other than Reduced Capability UE (e.g. normal UE). That is, the UE type may be information indicating a UE type including a normal UE type.

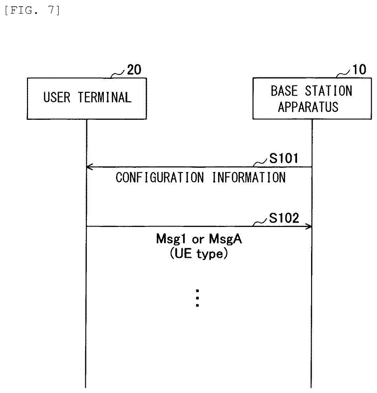

Fig. 7 shows a basic operation example of Example 1. In S101, the base station apparatus 10 transmits configuration information to the user terminal 20 and the user terminal 20 receives the configuration information. The configuration information may be information included in system information such as MIB and SIB, or information included in a synchronization signal. The configuration information includes information indicating a correspondence between information of a UE type and a resource or the like used by the user terminal 20 for transmitting the information of the UE type. The details will be described in the following examples.

In S102, the user terminal 20 notifies the base station apparatus 10 of information of a UE type (e.g., information representing whether or not the UE is Reduced Capability UE) by Msg1 (when four-step RACH is executed) or MsgA (when two-step RACH is executed).

Since there are variations of Examples 1-1 to 1-4 in Example 1, each will be described in the following.

### <Example 1-1>

In Example 1-1, the user terminal 20 notifies the base station apparatus 10 of information of a UE type by a preamble index of a preamble transmitted by Msg1 or MsgA. The preamble index is an example of a resource for preamble transmission.

In this case, for example, in S101 illustrated in FIG. 7, information representing a correspondence relationship between information of a UE type and a preamble index is notified in advance from the base station apparatus 10 to the user terminal 20.

In addition, multiple preamble indexes in a single RACH occasion (RO) may be divided into multiple groups, and each group may be associated with information of a UE type. In this case, for example, the base station apparatus 10 may notify the user terminal 20 of a group of preamble indexes for notifying that a user terminal is Reduced Capability UE. Alternatively, the group may be predetermined in the specification, etc. For example, the user terminal 20, which is a Reduced Capability UE, selects one preamble index from the group and transmits the preamble.

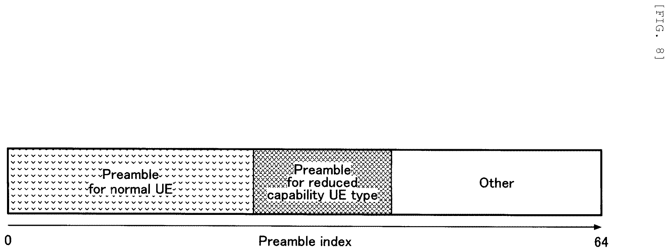

Figs. 8-11 show an example of grouping. Figs. 8-11 show examples of assignment within 64 preamble indexes in 1RO.

In the example shown in Fig. 8, a group of preamble indexes used by a normal UE, a group of preamble indexes used by a Reduced Capability UE, and other groups are assigned as shown in the figure.

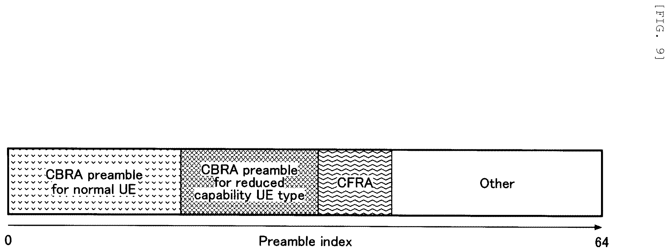

In the example shown in FIG. 9, a group of preamble indexes used by a normal UE in CBRA, a group of preamble indexes used by a Reduced Capability UE in CBRA, a group of preamble indexes used in CFRA, and other groups are assigned as shown in the figure. That is, a group may be assigned for each UE type (normal UE, reduced capability UE, etc.) in preamble indexes for CBRA.

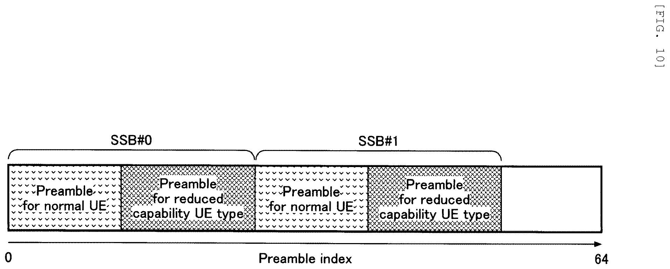

Also, preamble indexes corresponding to each SSB group may be grouped for each UE type. In the example of FIG. 10, for example, in a group corresponding to SSB#0, a group of preamble indexes used by a normal UE and a group of preamble indexes used by a Reduced Capability UE are assigned. The same applies to SSB #1. For example, when the user terminal 20, which is a Reduced Capability UE, selects SSB #0, the user terminal 20 selects and uses a preamble index in the group of preamble indexes for the Reduced Capability UE in the group of preamble indexes corresponding to SSB #0.

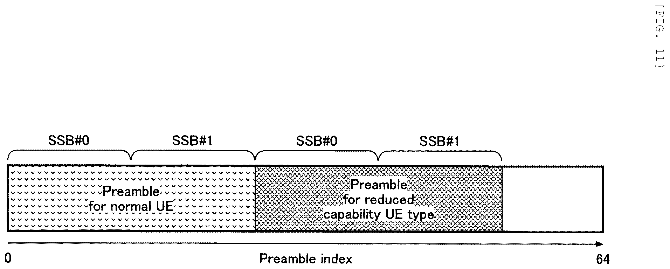

A relationship between SSB and preamble indexes may be specified in a group corresponding to each UE type. For example, in the example shown in Fig. 11, a group of preamble indexes corresponding to SSB #0 and a group of preamble indexes corresponding to SSB #1 are assigned, in a group corresponding to a normal UE, and a group of preamble indexes corresponding to SSB #0 and a group of preamble indexes corresponding to SSB #1 are assigned, in a group corresponding to a Reduced Capability UE.

Also, one or more of the following (1) to (4) may be applied as assignment of preamble indexes within 1RO. Note that, in the following (1) to (3), existing Preamble groups (preamble groups defined in the existing specification or preamble groups that are already proposed) are alternatively used as groups for each UE type in this embodiment. Also, in (4) below, groups are assigned for each UE type in addition to existing preamble groups.
(1) Groups of preamble group A/B are reused according to Msg3 sizes . In this case, for example, a normal UE uses a preamble in the preambel group A and the Reduced Capability UE uses a preamble in the preamble group B. A and B may be the opposite of this example.
(2) Preamble groups that distinguish between two-step RACH and four-step RACH are reused.
(3) In preambles for two-step RACH, preamble groups that are associated with multiple MsgA PUSCH configurations may be reused. For example, a normal UE may use a preamble in a preamble group associated with MsgA PUSCH configuration 1, and a reduced Capability UE may use a preamble in a preamble group associated with MsgA PUSCH configuration 2.
(4) Existing groups may be divided into groups for each new UE type, and existing groups may be divided in groups for each new UE type. An existing group is, for example, any one or more of (1) to (3) above.

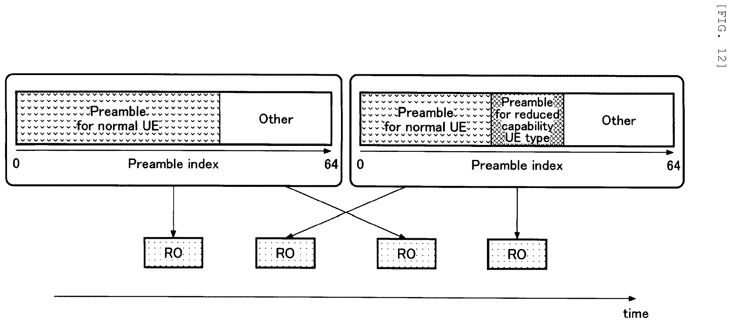

Also, for only a portion of all ROs assigned to a normal UE, a preamble index that is available by a UE of new UE type (that is, a type of UE other than the existing UE, for example, a Reduced Capability UE) may be assigned. An example is shown in Fig. 12. In the example of Fig. 12, for two of four ROs, a preamble index that is available for a Reduced Capability UE is assigned.

### <Examples 1-2>

Next, Example 1-2 will be described. In the Example 1-2, the user terminal 20 notifies the base station apparatus 10 of information of a UE type by a RACH occasion (RO) in which the user terminal transmits a preamble. RACH occasion is an example of a resource for sending a preamble.

In Example 1-2, for example, in S101 illustrated in FIG. 7, information representing a correspondence relationship between information of a UE type (for example, information representing whether or not a UE is a Reduced Capability UE) and a RACH occasion is notified in advance from the base station apparatus 10 to the user terminal 20.

The user terminal 20 transmits a preamble in a RACH occasion corresponding to its own UE type based on information of the correspondence relationship. The base station apparatus 10 identifies the UE type of the user terminal 20 by the RACH occasion of the received preamble.

More specifically, the base station apparatus 10 may notify the user terminal 20 of a part or all of parameters related to the RACH occasion for a new UE type (e.g., Reduced capability UE).

In the present exemplary embodiment, configuration information of a RACH occasion (which is referred to as normal RO for convenience) for information notification of a UE type, which is not related to UE type or is a normal UE, is notified from the base station apparatus 10 to the user terminal 20 by an RRC message (RACH config) . The normal RO may be referred to as "RO for conventional UE".

In Example 1-2, by utilizing the normal RO, a RO for information notification of a UE type may be notified from the base station apparatus 10 to the user terminal 20 by a difference (offset) from the normal RO.

Also, for example, by utilizing a time position of the normal RO, a frequency start position of a RO for information notification of a UE type may be notified from the base station apparatus 10 to the user terminal 20. In this case, only the frequency resource position may be additionally notified, or a frequency offset from the frequency position (e.g., the start position) of the normal RO may be notified.

By utilizing the frequency position of the normal RO, a time start position of a RO for information notification of a UE type may be notified from the base station apparatus 10 to the user terminal 20. In this case, only a time resource position may be notified additionally, or a time offset from the time position of the normal RO (e.g., start position, or end position, or both start and end positions) may be notified.

Also, by utilizing only a portion of RO in the normal RO, differences and the like may be notified by a parameter.

More specifically, as an example, an offset from the normal RO is notified from the base station apparatus 10 to the user terminal 20 as a RO for UE type information notification. The normal RO and the offset may be notified at the same timing (e.g., S101 in Fig. 7) or at different timing.

The user terminal 20 notifies the base station apparatus 10 of its own UE type by transmitting a preamble using a RO obtained by adding an offset to a normal RO corresponding to a selected SSB.

The base station apparatus 10 may notify the user terminal 20 of a frequency position of a new RO (RO for UE type notification) at the same time position as the normal RO in addition to configuration information of the normal RO. The base station apparatus 10 may notify the user terminal 20 of a time position of a new RO (RO for UE type notification) at the same frequency position as the normal RO in addition to configuration information of the normal RO.

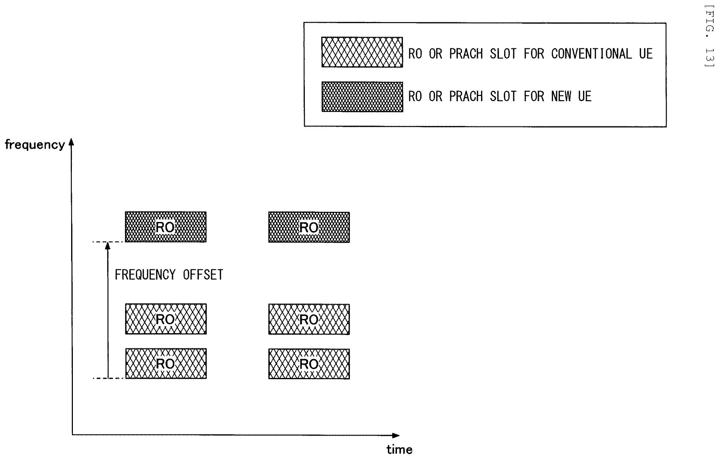

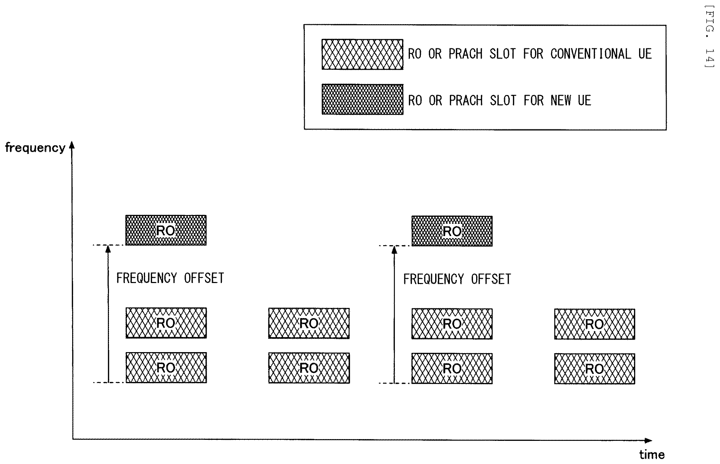

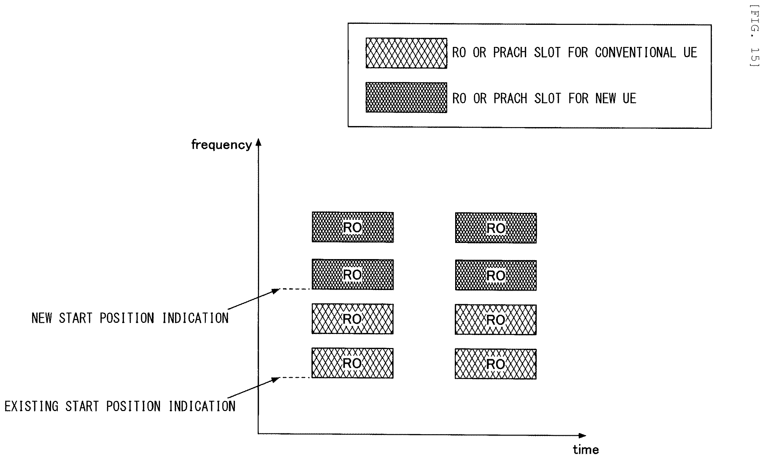

Figs 13 to 16 show examples. Figs. 13 and 14 show an example of specifying a RO for informing information of a UE type by an offset in a frequency direction with respect to a normal RO (RO for conventional UE). In the case of FIG. 13, there is a RO for notifying information of a UE type at frequency locations apart by a frequency offset for each of positions of normal ROs in the time domain. In the case of FIG. 14, there is a RO for notifying information of a UE type at a frequency posiiton apart by a frequency offset at a portion of all positions of normal ROs in the time domain. In the example of FIG. 15, there is a RO for informing information of a UE type at a specified frequency position, at a position of the normal RO in the time domain.

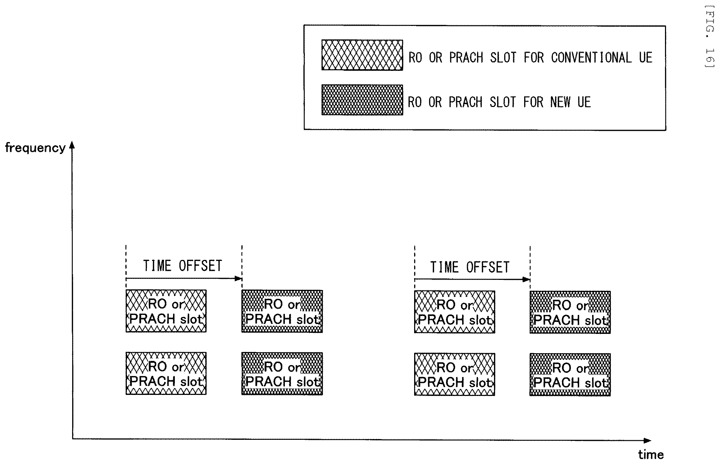

Fig. 16 shows an example of specifying a RO for notifying information of a UE type by an offset in a time direction with respect to a normal RO or a "slot (= PRACH slot) in which a normal RO exists". For example, when the normal RO is symbols #0 to #3 within slot #1 in the time domain, when 7 symbols is notified as a time offset, the user terminal 20 can understand that the time position of a RO for notifying information of a UE type is from symbol #7 to symbol #10 in slot #1.

For example, when a normal RO is symbols #0 to #3 of slot #1 and two slots are notified as a time offset, the user terminal 20 can recognize that a RO for notifying information of a UE type is symbols #0 to #3 in slot #3.

### <Example 1-3>

In Example 1-3, the user terminal 20 notifies the base station apparatus 10 of information of a UE type by a sequence generation method of a preamble, or a preamble format. The preamble sequence generation method (such as the root sequence index) and the preamble format are examples of resources for transmitting a preamble.

An example of a sequence generation method of a preamble is which root sequence index to use for generating a sequence. In this case, for example, in S101 of Fig. 7, root sequence indexes for each UE type are notified from the base station apparatus 10 to the user terminal 20. The root sequence indexes for each UE type may be specified in the specification without such notification. The user terminal 20 generates a preamble with the root sequence index corresponding to its UE type and transmits the preamble to the base station apparatus 10. The base station apparatus 10 can recognize the UE type of the user terminal 20 by the root sequence index identified when decoding the preamble.

When utilizing a preamble format, for example, in S101 of Fig. 7, preamble formats for each UE type are notified from the base station apparatus 10 to the user terminal 20. Preamble formats for each UE type may be specified in the specification without such notification. The user terminal 20 generates a preamble using the preamble format corresponding to its own UE type and transmits it to the base station apparatus 10. The base station apparatus 10 can understand the UE type of the user terminal 20 by the preamble format identified when decoding the preamble.

### <Example 1-4>

In Example 1-4, for example, in S101 of FIG. 7, the base station apparatus 10 notifies the user terminal 20 of independent RACH configuration for each UE type. For example, when there are UE type 1 and UE type 2, RACH configuration 1 of UE type 1 and RACH configuration 2 of UE type 2 are notified. RACH configuration is an example of a resource for sending a preamble.

For example, if the UE type of the user terminal 20 is UE type 2 (for example, Reduced capability UE), the user terminal 20 transmits a preamble based on configuration of RACH configuration 2 corresponding to UE type 2.

For example, when the base station apparatus 10 determines that a sequence, time position, and frequency position and the like of a received preamble correspond to RACH configuration 2, the base station apparatus 10 can determine that the UE type of the user terminal 20 of transmission source is UE type 2.

### <Other>

As a common matter according to Example 1 (Examples 1-1 to 1-4), as to configuration information other than configuration information notified to the user terminal 20 from the base station apparatus 10 for notifying information of a UE type, configuration information for a normal UE (other than the reduced capability UE) may be applied for Reduced capability UE. For example, in the case where a number of times of power ramping of a preamble is not notified in configuration information notified by the base station apparatus 10 for notification of information of UE type information, the Reduced capacity UE may apply a number of times of power ramping notified for a normal UE.

### <Example of information notification method of Example 1>

As described above, in the Example 1, the user terminal 20 notifies the base station apparatus 10 of the information of its own UE type when transmitting Msg1 or when transmitting MsgA preamble.

Therefore, for example, in S101 of FIG. 7, the base station apparatus 10 transmits one or more of the following information to the user terminal 20: information of correspondence relationship between preamble index and UE type; information of correspondence relationship between RO and UE type; information of correspondence relationship between preamble sequence generation method and UE type; information on correspondence relationship between preamble format and UE type; and information of RACH configuration for each UE type.

As described above, the information transmitted from the base station apparatus 10 to the user terminal 20 is referred to as "configuration information." The method of transmitting configuration information is not limited to a specific method, but the method of Example 1 or Example 2 below may be used, for example.

### (Example 1)

In Example 1, the base station apparatus 10 notifies the user terminal 20 of configuration information by SIB1 for UE of a new UE type (for example, Reduced Capability UE).

That is, in Example 1, SIB1 is introduced which a user terminal of a conventional UE type (normal UE) does not read, but only a user terminal of a new UE type reads, and the configuration information is included in the SIB1.

In Example 1, the user terminal 20, which is a Reduced capability UE, can obtain necessary information obtained with the conventional SIB1 by reading only the SIB1 without reading the conventional SIB1. That is, the SIB1 may include information included in the conventional SIB1(for example, Non-Patent Document 3), such as cellSelectionInfo, cellAccessRelatedInfo, connEstFailureControl, si-SchedulingInfo, servingCellConfigCommon, uac-BarringInfo, etc. in addition to the above-described configuration information.

### (Example 2)

In Example 2, in addition to transmitting a SIB1 (e.g., a SIB1 common to all UEs) to be read by a UE (normal UE) of the conventional UE type, the base station apparatus 10 may additionally notify configuration information for UE (e.g., Reduced capability UE) of the new UE type with a new SIB1.

That is, in Example 2, the user terminal 20 reads a SIB1, which a UE of the conventional UE type also reads, and then reads a SIB 1, which only UEs of the new UE type reads. In addition to information of the SIB1 which a UE of a conventional UE type also reads, only necessary information may be included in the SIB1 for UE of the new UE type.

In the above examples 1 and 2, SIB1 is used as an example of system information, but other SIBs may be used instead of SIB1. MIB may also be used instead of SIB1. The conventional SIB1 and the SIB1 read by the UE of the new UE type may be transmitted by a common physical resource or by an independent physical resource.

According to the Example 1 described above, the base station apparatus 10 can quickly determine a UE type (for example, whether the UE is Reduced Capability UE) of the user terminal 20.

### (Example 2)

Next, Example 2 will be described. Example 2 is based on Example 1, and information of a UE type corresponding to the user terminal 20 is notified by Msg2 or MsgB to the user terminal 20 by the base station apparatus 10 that receives a preamble (Msg1 or MsgA preamble) from the user terminal 20.

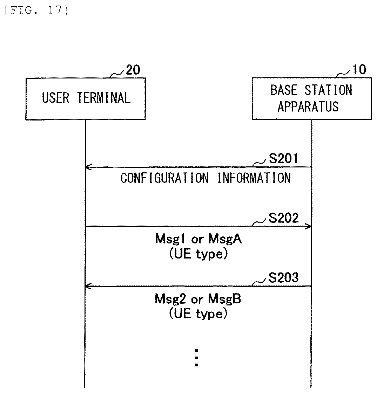

An operation example of Example 2 will be described with reference to Fig. 17. In S201, the base station apparatus 10 transmits configuration information to the user terminal 20 and the user terminal 20 receives the configuration information. The configuration information may include information for calculating an RNTI as described below in addition to the configuration information in Example 1.

In S202, the user terminal 20 notifies the base station apparatus 10 of information of a UE type (e.g., information representing whether or not the UE is Reduced Capability UE) by Msg1 (when four-step RACH is executed) or MsgA (when two-step RACH is executed).

In S203, the base station apparatus 10 notifies the user terminal 20 of information of a UE type corresponding to the user terminal 20 by Msg2 (when four-step RACH is executed) or MsgB (when two-step RACH is executed) . Hereinafter, "Msg2 (when executing four-step RACH) or MsgB (when executing two-step RACH)" is written as "Msg2/MsgB".

For example, content (which may be called a payload) of Msg2/MsgB contains a bit corresponding to information indicating the UE type (e.g., information indicating whether it is a message corresponding to a preamble sent by a Reduced Capability UE). The number of bit(s) may be one or more than one.

For example, if the value of the bit included in the content of Msg2/MsgB received from the base station apparatus 10 is 1 (or 0), the user terminal 20 that is a Reduced Capability UE can determine that the received Msg2/MsgB is Msg2/MsgB corresponding to the Reduced Capability UE.

Since the base station apparatus 10 transmits the Msg2/MsgB by a PDSCH to the user terminal 20, a PDCCH (DCI) scheduling the PDSCH is transmitted from the base station apparatus 10 to the user terminal 20. The DCI may contain bit(s) corresponding to information indicating the UE type (e.g., information indicating whether the message corresponds to the preamble message transmitted by the Reduced Capability UE) . The number of bit(s) of the bit may be one, or more than one.

For example, the user terminal 20, which is a Reduced Capability UE, can determine that the received DCI is a DCI for Msg2/MsgB corresponding to the Reduced Capability UE if the value of the bit contained in the DCI for scheduling the Msg2/MsgB received from the base station apparatus 10 is 1 (or 0).

Information of the corresponding UE type may be used as a computational element of an RNTI (e.g., RA-RNTI, MsgB-RNTI, C-RNTI, etc.) used to monitor the PDCCH (DCI) that schedules the PDSCH of Msg2/MsgB.

For example, when a preamble is transmitted from the user terminal 10 to the base station apparatus 20 using a RO corresponding to information of a UE type, the base station apparatus 10 calculates an RNTI using the information of the time position at which the RO was transmitted (e.g., a slot number and a symbol number) and transmits a DCI scrambled by the RNTI to the user terminal 20 through a PDCCH. The user terminal 20 decodes the DCI with an RNTI calculated using the information of the time position. The user terminal 20 can determine that the received DCI is a DCI for Msg2/MsgB corresponding to the Reduced Capability UE because the DCI can be decoded by the RNTI.

An RNTI calculated by an equation containing the information of the corresponding UE type as a term may be used. For example, the base station apparatus 10 calculates the RNTI by an equation including the information of the UE type corresponding to the user terminal 20 as a term and transmits the DCI scrambled by the RNTI to the user terminal 20 by a PDCCH. The user terminal 20 decodes the DCI with an RNTI calculated by an equation including the information of the UE type as a term. The user terminal 20 can determine that the received DCI is a DCI for Msg2/MsgB corresponding to the Reduced Capability UE because the DCI can be decoded by the RNTI.

According to Example 2, for example, the user terminal 20, which is a Reduced Capability UE, can determine whether a received Msg2/MsgB is a message corresponding to the preamble transmitted by the Reduced Capability UE.

### (Example 3)

Next, Example 3 will be described. Example 3 is based on Example 1. Example 3 may be based on Example 1 and Example 2. However, Example 3 may be performed when the notification of the information of the UE type in Example 1 is not made to the base station apparatus 10. That is, Example 3 may not be based on Example 1 (and Example 2).

In Example 3, the user terminal 20 notifies the base station apparatus 10 of information of a UE type (e.g., information indicating whether or not a UE is a Reduced Capability UE) by Msg3 (at the time of executing four-step RACH) or MsgA PUSCH (at the time of executing two-step RACH). Hereinafter, "Msg3 (when executing four-step RACH) or MsgA PUSCH (when executing two-step RACH) " is referred to as "Msg3/MsgA PUSCH".

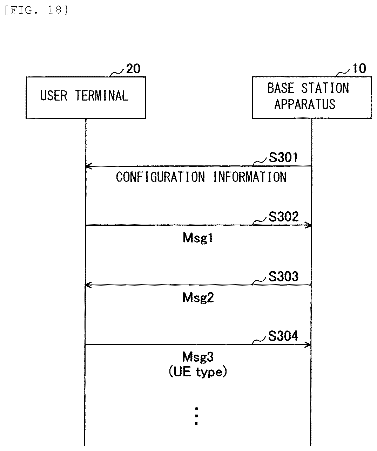

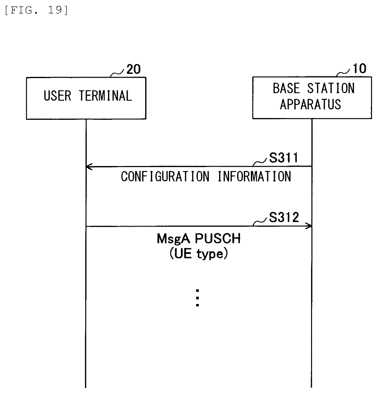

An operation example of Example 3 will be described with reference to Figs. 18 and 19. Fig. 18 shows an example of an operation in the case of four-step RACH. In S301, the base station apparatus 10 transmits configuration information to the user terminal 20 and the user terminal 20 receives the configuration information. For example, the configuration information is the same as the configuration information in Example 1. The configuration information may include information of a UE ID as described below.

In S302, the user terminal 20 transmits Msg1 to the base station apparatus 10. In S203, the base station apparatus 10 transmits Msg2 to the user terminal 20. In S304, the user terminal 20 transmits Msg3 including the information of the UE type to the base station apparatus 10.

Fig. 19 shows an example of operation in the case of a two-step RACH. In S311, the base station apparatus 10 transmits configuration information to the user terminal 20 and the user terminal 20 receives the configuration information. For example, the configuration information is the same as the configuration information in the Example 1. The configuration information may include information of a UE ID as described below.

In S312, the user terminal 20 transmits MsgA to the base station apparatus 10. The information of the UE type is notified from the user terminal 20 to the base station apparatus 10 by a PUSCH in the MsgA.

In the example of Figs. 18 and 19 above, the user terminal 20 notifies the base station apparatus 10 of the information of the UE type as content (also referred to as payload) of Msg3/MsgA PUSCH, for example. That is, the information of the UE type may be a part of the Msg3/MsgA PUSCH data. The user terminal 20 may select a UE ID corresponding to the UE type and may include the UE ID in the Msg3/MsgA PUSCH. In this case, the information of the UE ID for each UE type may be notified in advance from the base station apparatus 10 to the user terminal 20.

The base station apparatus 10 can identify whether or not the user terminal 20 of the transmission source is a Reduced Capability UE based on the UE ID included in the Msg3/MsgA PUSCH received from the user terminal 20.

According to Example 3, the base station apparatus 10 can know the UE type of the user terminal 20 (e.g., whether it is a Reduced Capability UE).

### (Example 4)

Example 4 will now be described. Example 4 is based on Example 1 or Example3. The base station apparatus 10 that receives notification of information of a UE type from the user terminal 20 notifies the user terminal 20 of information of the UE type corresponding to the user terminal 20 by Msg4.

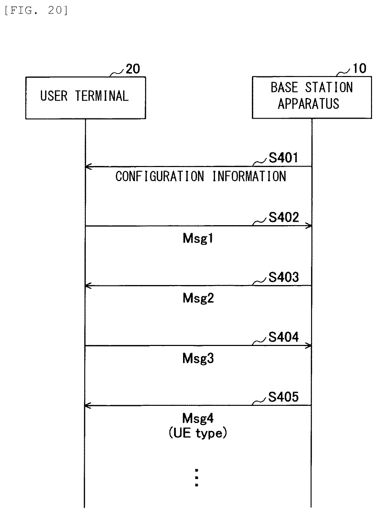

An operation example of Example 4 will be described with reference to Fig. 20. In S401, the base station apparatus 10 transmits configuration information to the user terminal 20 and the user terminal 20 receives the configuration information. The configuration information may include information for calculating an RNTI as described below in addition to the configuration information in Example 1.

In S402, the user terminal 20 notifies the base station apparatus 10 of information of a UE type (for example, information representing whether or not the UE is a Reduced Capability UE) by Msg1. Further, the information of the UE type (e.g., information indicating whether or not the UE is Reduced Capability UE) may be notified to the base station apparatus 10 by Msg3, which will be described later.

In S403, the base station apparatus 10 transmits Msg2 to the user terminal 20. In S404, the user terminal 20 transmits Msg3 to the base station apparatus 10.

In S405, the base station apparatus 10 notifies the user terminal 20 of information of the UE type corresponding to the user terminal 20 by Msg 4.

For example, content of Msg4 (which may be called a payload) may contain bit(s) corresponding to information indicating the UE type (e.g., information indicating whether it is a message corresponding to transmission by the Reduced Capability UE) . The number of bit(s) in this bit may be one, or more than one.

For example, if the value of the bit included in the content of the Msg4 received from the base station apparatus 10 is 1 (or 0), the user terminal 20 that is a Reduced Capability UE can determine that the received Msg4 is a Msg4 corresponding to the Reduced Capability UE.

Since the Msg4 is transmitted from the base station apparatus 10 to the user terminal 20 by a PDSCH, a PDCCH (DCI) that schedules the PDSCH is transmitted from the base station apparatus 10 to the user terminal 20. The DCI may contain bit(s) corresponding to information indicating the UE type (e.g., information indicating whether it is a message corresponding to transmission by the Reduced Capability UE). The number of bit(s) in this bit may be one, or more than one.

For example, if the value of the bit included in the DCI for scheduling of Msg4 received from the base station apparatus 10 is 1 (or 0), the user terminal 20, which is a Reduced Capability UE, can determine that the received DCI is a DCI for Msg4 corresponding to the Reduced Capability UE.

Information of a corresponding UE type may also be used as a component of calculation of an RNTI (e.g., C-RNTI) used for monitoring the PDCCH (DCI) scheduling the PDSCH of Msg4.

For example, when a preamble is transmitted from the user terminal 20 to the base station apparatus 10 using a RO corresponding to information of a UE type, the base station apparatus 10 calculates the RNTI using information of the time position at which the RO was transmitted (e.g., a slot number and a symbol number) and transmits a DCI scrambled by the RNTI to the user terminal 20 through PDCCH. The user terminal 20 decodes the DCI with an RNTI calculated using the information of the time position. The user terminal 20 can determine that the received DCI is a DCI for Msg4 corresponding to the Reduced Capability UE because the DCI can be decoded by the RNTI.

An RNTI calculated by an equation containing information of corresponding UE type as a term may also be used. For example, the base station apparatus 10 calculates the RNTI by an equation including the information of the UE type corresponding to the user terminal 20 as a term and transmits a DCI scrambled by the RNTI to the user terminal 20 by PDCCH. The user terminal 20 decodes the DCI with an RNTI calculated by the equation including the information of the UE type as a term. The user terminal 20 can determine that the received DCI is a DCI for Msg4 corresponding to the Reduced Capability UE because the DCI can be decoded by the RNTI.

According to Example 4, for example, the user terminal 20, which is a Reduced Capability UE, can determine whether a received Msg4 is a message corresponding to a preamble (or Msg3) transmitted by the Reduced Capability UE.

### (Example 5)

Next, Example 5 will be described. Example 5 may be implemented in combination with any of Examples 1 through 4. Example 5 may be implemented alone regardless of Examples 1 through 4. In Example 5, the base station apparatus 10 of a cell transmits information indicating whether a UE of a new UE type (e.g., Reduced capacity UE) may access the cell. The user terminal 20 that receives the information from the base station apparatus 10 can determine whether or not to access the cell.

Accessing by the user terminal 20 to a cell means, for example, camping on to the cell by the user terminal 20, which may be referred to as residing in the cell. Further, when the user terminal 20 is unable to access the cell, for example, the user terminal 20 may determine that the cell is barred.

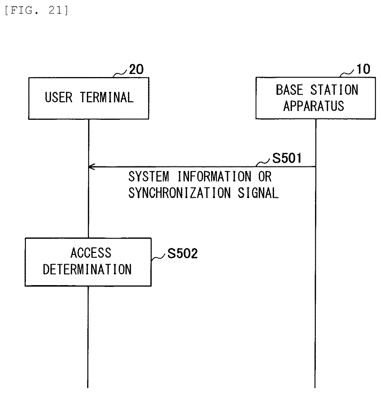

An operation example of Example 5 will be described with reference to Fig. 21. In S501, information indicating whether or not a UE of a new UE type UE (e.g., Reduced capacity UE) may access the cell is transmitted from the base station apparatus 10. Fig. 21 illustrates an example in which the information is transmitted by system information (also referred to as broadcast information) or a synchronization signal. In this example, the information is transmitted as common information between UEs.

The user terminal 20 that received the information determines whether to access the cell of the base station apparatus 10 based on the information in S502. Examples 5-1 to 5-3 will now be described as variations of Example 5.

### <Example 5-1>

In Example 5-1, the UE of the new UE type (e.g., the Reduced Capability UE) determines whether or not to access the cell according to whether a SIB1 transmitted from the base station apparatus 10 contains information necessary to access the cell.

For example, when the user terminal 20, which is a Reduced Capability UE, receives a SIB1 transmitted from the base station apparatus 10 of a cell and detects that the SIB1 contains information necessary for the user terminal 20 of the Reduced Capability UE to access the cell, the user terminal 20 determines that the cell is allowed to be accessed and starts a subsequent random access procedure and the like. On the other hand, if the SIB 1 does not contain the information necessary for access, the user terminal 20 may determine that the cell cannot be accessed.

The SIB1 described above may be a SIB1 which is also read by a conventional UE (normal UE) or a SIB1 for UEs of a new UE type.

The above-described information necessary for access may be information necessary for notifying the information of the UE type to the base station apparatus 10 by transmitting a preamble. For example, the information may be configuration information in Example 1, which may be information representing a correspondence relationship between a preamble index and a UE type, information representing a correspondence relationship between a RO and a UE type, information representing a correspondence relationship between a sequence generation method of a preamble and a UE type, information representing a correspondence relationship between a preamble format and a UE type, RACH configuration for each UE type, and the like.

The information necessary for access described above may be information necessary for receiving Msg2-4, receiving MsgB, or subsequent RRC connection, based on the new UE type. That is, the information necesary for access described above may be information necessary in Examples 2 to 4.

### <Example 5-2>

In Example 5-2, information indicating whether a UE of a new UE type (e.g., Reduced capability UE) can access a cell is notified by system information (e.g., SIB1, MIB, or other SIB) transmitted from the base station apparatus. System information may be referred to as notification information or broadcast information.

For example, system information notifies a bit indicating barred information for a new UE type. As an example, when the user terminal 20 that is a Reduced Capability UE receives system information in which the barred information is true (not accessible) in a cell, the user terminal 20 determines that the cell is inaccessible.

For example, information by which a UE can determine whether a cell can be accessed based on information held by the UE may be notified by system information. For example, the UE may determine, based on the information notified by the system information, whether information held by the UE itself permits access to the cell. The information retained by the UE in advance may be information like a UE ID, or it may be other information retained in advance. If the UE type is related to the information held in advance by the UE, notification of access availability is possible according to a UE type.

More specifically, for example, a value is notified from the base station apparatus 10 to the user terminal 20. The user terminal 20 determines that the cell of the base station apparatus 10 can be accessed if the information stored in advance by the user terminal 20 (here, a numerical value is assumed) is the value (or equal to or greater than the value) . The value notified by the base station apparatus 10 may be equivalent to a value of UE type.

### <Example 5-3>

In Example 5-3, information indicating whether a UE of a new UE type (e.g., Reduced capability UE) may access a cell may be notified by a synchronization signal (e.g., PSS sequence, SSS sequence, other synchronization signal sequence, RS (e.g., DMRS) associated with synchronization signals) transmitted from the base station apparatus 10 of the cell.

For example, if the user terminal 20, being a Reduced Capability UE, receives in a cell a synchronization signal containing information indicating that a Reduced Capability UE cannot access the cell, the user terminal 20 determines that the cell is inaccessible.

According to Example 5, the user terminal 20, which is a Reduced Capability UE, can appropriately determine whether or not the cell can be accessed.

### (Other Examples)

As described with reference to Examples 1 to 5, in the present embodiment, the information of the UE type notified by the user terminal 20 is mainly information indicating whether or not the user terminal 20 is a Reduced Capability UE. However, this is an example, and the information of the UE type notified by the user terminal 20 may be information representing attributes other than the Reduced Capability UE related to the user terminal 20.

For example, the information of the UE type notified by the user terminal 20 may be information representing the maximum transmission power of the user terminal 20. Information indicating the maximum transmission power may also be referred to as power class.

The information of UE type may be, for example, any of the following pieces of information.

· Device shape type such as a wearable terminal;
· Type based on features of services such as URLLC, eMBB, mMTC (IoT) ;
· Service type such as sensor, VR device, AR device, etc.

### (Equipment configuration)

Next, a functional configuration example of the base station apparatus 10 and the user terminal 20 that perform the processing and operations described above will be described. The base station apparatus 10 and the user terminal 20 include functions for implementing the above-described Examples 1-5. However, the base station apparatus 10 and the user terminal 20 may each comprise only functions of any one of Examples 1-5.

### <Base Station Apparatus 10>

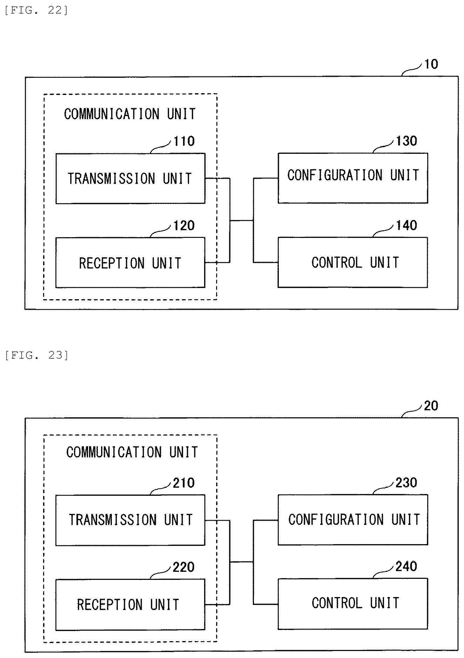

Fig. 22 is a diagram illustrating an example of a functional configuration of the base station apparatus 10. As shown in Fig. 22, the base station apparatus 10 includes a transmission unit 110, a reception unit 120, a configuration unit 130, and a control unit 140. The functional configuration shown in FIG. 22 is only one example. If the operation according to the embodiments of the present invention can be performed, the functional category and the name of the functional unit may be any one. The transmission unit 110 and the reception unit 120 may be collectively referred to as a communication unit.

The transmission unit 110 includes a function for generating a signal to be transmitted to the user terminal 20 side and transmitting the signal wirelessly. The receiving unit 120 includes a function for receiving various signals transmitted from the user terminal 20 and acquiring, for example, information of a higher layer from the received signals. The transmission unit 110 has a function to transmit NR-PSS, NR-SSS, NR-PBCH, and DL/UL control signals, DL data, and the like to the user terminal 20. The transmission unit 110 transmits the configuration information (information representing the correspondence relationship) described in Examples 1-5.

The configuration unit 130 stores preconfigured configuration information and various configuration information to be transmitted to the user terminal 20 in the storage device provided by the configuration unit 130 and reads the preconfigured configuration information from the storage device as necessary. The contents of the configuration information may be, for example, a preamble resource, a PUSCH resource, a RAR window length, etc. used for a random access procedure. The configuration information described in Examples 1-5 is read out from the configuration unit 130 and notified to the user terminal 20 by the transmission unit 110.

The control unit 140 performs, for example, resource allocation and control of the entire base station apparatus 10. A function unit related to signal transmission in the control unit 140 may be included in the transmission unit 110, and a function unit related to signal reception in the control unit 140 may be included in the reception unit 120. The transmission unit 110 and the reception unit 120 may be called a transmitter and a receiver, respectively.

### <User terminal 20>

Fig. 23 is a diagram illustrating an example of the functional configuration of the user terminal 20. As shown in Fig. 23, the user terminal 20 includes a transmission unit 210, a reception unit 220, a configuration unit 230, and a control unit 240. The functional configuration shown in FIG. 23 is only one example. If the operation according to the embodiments of the present invention can be performed, the functional category and the name of the functional unit may be any one. The transmission unit 210 and the reception unit 220 may be collectively referred to as a communication unit.

The transmission unit 210 creates a transmission signal from the transmission data and wirelessly transmits the transmission signal. The receiving unit 220 receives various signals wirelessly and acquires signals from higher layers from the received signal of the physical layer.

The configuration unit 230 stores various configuration information received from the base station apparatus 10 or other user terminals by the receiving unit 220 in a storage device provided by the setting unit 230 and reads it from the storage device as necessary. The configuration unit 230 also stores preconfigured configuration information. The contents of the configuration information include, for example, the configuration information described in Examples 1-5. The control unit 240 performs control or the like described in Examples 1 to 5.

A functional unit related to signal transmission in the control unit 240 may be included in the transmission unit 210, and a functional unit related to signal reception in the control unit 240 may be included in the reception unit 220. The transmission unit 210 may be referred to as a transmitter, and the reception unit 220 may be referred to as a receiver.

A terminal as the user terminal 20 is configured as at least terminals described in the following items, for example.

### (Item 1)

A terminal comprising:
a reception unit 220 configured to receive configuration information for use in a random access procedure from a base station apparatus; and
a transmission unit 210 configured to transmit information indicating an attribute of the terminal to the base station apparatus in the random access procedure based on the configuration information.

### (Item 2)

The terminal as described in item 1,
wherein the transmission unit 210 transmits the information indicating the attribute of the terminal to the base station apparatus by a preamble in the random access procedure or by a physical uplink shared channel.

### (Item 3)

The terminal as described in item 2,
wherein, when the transmission unit 210 transmits the information indicating the attribute by the preamble, the transmission unit transmits the preamble based on a correspondence relationship, indicated by the configuration information, between a resource for transmitting the preamble and the information indicating the attribute.

### (Item 4)

The terminal as described in any one of items 1-3,
wherein the reception unit 220 receives the information indicating the attribute by a response from the base station apparatus in the random access procedure.

### (Item 5)

The terminal as described in any one of items 1-4,
wherein the attribute is an attribute indicating whether the terminal is a capability reduced terminal.

### (Item 6)

The terminal as described in any one of items 1-5, further comprising:
a control unit 240 configured to determine whether the terminal accesses a cell of the base station apparatus based on system information or a synchronization signal received from the base station apparatus by the reception unit 220.

According to any of items 1-6, a technology that enables a user terminal to appropriately notify information representing an attribute of the user terminal to the base station apparatus is provided.

### (Hardware configuration)

The block diagrams (Fig. 22 and Fig. 23) used in the description of the embodiment described above illustrate the block of functional unit. Such function blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions transmission is referred to as the transmitting unit or the transmitter. As described above, the attainment method thereof is not particularly limited.

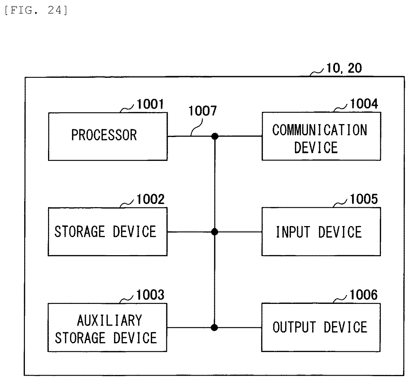

For example, the base station apparatus 10, the user terminal 20, and the like in one embodiment of this disclosure may function as a computer for performing the processing of a radio communication method of this disclosure. Fig. 24 is a diagram illustrating an example of a hardware configuration of the base station apparatus 10 and the user terminal 20 according to one embodiment of this disclosure. The base station apparatus 10 and the user terminal 20 described above may be physically configured as a computer apparatus including a processor 1001, a storage unit 1002, an auxiliary storage unit 1003, a communication unit 1004, an input unit 1005, an output unit 1006, a bus 1007, and the like.

Note that, in the following description, the word "apparatus" can be replaced with a circuit, a device, a unit, or the like. The hardware configuration of the base station apparatus 10 and the user terminal 20 may be configured to include one or a plurality of apparatuses illustrated in the drawings, or may be configured not to include a part of the apparatuses.

Each function of the base station apparatus 10 and the user terminal 20 is attained by reading predetermined software (a program) on hardware such as the processor 1001 and the storage unit 1002 such that the processor 1001 performs an operation, and by controlling the communication of the communication unit 1004 or by controlling at least one of reading and writing of data in the storage unit 1002 and the auxiliary storage unit 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage unit 1002 from at least one of the auxiliary storage unit 1003 and the communication unit 1004, and thus, executes various processings. A program for allowing a computer to execute at least a part of the operation described in the embodiment described above is used as the program. For example, the control unit 140 of the base station apparatus 10 illustrated in Fig. 22 may be attained by a control program that is stored in the storage unit 1002 and is operated by the processor 1001 . In addition, for example, the control unit 240 of the user terminal 20 illustrated in Fig. 23 may be attained by a control program that is stored in the storage unit 1002 and is operated by the processor 1001. It has been described that the various processings described above are executed by one processor 1001, but the processings may be simultaneously or sequentially executed by two or more processors 1001. The processor 1001 may be mounted on one or more chips. Note that, the program may be transmitted from a network through an electric communication line.

The storage unit 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage unit 1002 may be referred to as a register, a cache, a main memory (a main storage unit), and the like. The storage unit 1002 is capable of retaining a program (a program code) that can be executed in order to implement a communication method according to one embodiment of this disclosure, a software module, and the like.

The auxiliary storage unit 1003 is a computer readable recording medium, and for example, may be configured of at least one of an optical disk such as a compact disc ROM (CD-ROM) , a hard disk drive, a flexible disk, a magnetooptical disk (for example, a compact disc, a digital versatile disk, and a Blu-ray (Registered Trademark) disk), a smart card, a flash memory (for example, a card, a stick, a key drive), a floppy (Registered Trademark) disk, a magnetic strip, and the like. The auxiliary storage unit 1003 may be referred to as an auxiliary storage unit. The storage medium described above, for example, may be a database including at least one of the storage unit 1002 and the auxiliary storage unit 1003, a server, and a suitable medium.

The communication unit 1004 is hardware for performing communication with respect to the computer through at least one of a wire network and a radio network (a transmitting and receiving device), and for example, is also referred to as a network device, a network controller, a network card, a communication module, and the like. The communication unit 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication unit 1004. In the transmitting and receiving unit, the transmitting unit and the receiving unit are mounted by being physically or logically separated.

The input unit 1005 is an input device for receiving input from the outside (for example, a keyboard, a mouse, a microphone, a switch, a button, a sensor, and the like). The output unit 1006 is an output device for implementing output with respect to the outside (for example, a display, a speaker, an LED lamp, and the like). Note that, the input unit 1005 and the output unit 1006 may be integrally configured (for example, a touch panel).

In addition, each of the apparatuses such as the processor 1001 and the storage unit 1002 may be connected by the bus 1007 for performing communication with respect to information. The bus 1007 may be configured by using a single bus, or may be configured by using buses different for each of the apparatuses.

In addition, the base station apparatus 10 and the user terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station apparatus 10 and the user terminal 20 have been described by using a functional block diagram, but such an apparatus may be attained by hardware, software, or a combination thereof. Each of software that is operated by a processor of the base station apparatus 10 according to the embodiment of the invention and software that is operated by a processor of the user terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, a 4th generation mobile communication system (4G), a 5th generation mobile communication system (5G), future radio access (FRA), new radio (NR), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station apparatus 10 may be performed by an upper node, in accordance with a case. In a network provided with one or a plurality of network nodes including the base station apparatus 10, it is obvious that various operations that are performed in order for communication with respect to the user terminal 20 can be performed by at least one of the base station apparatus 10 and network nodes other than the base station apparatus 10 (for example, MME, S-GW, or the like is considered as the network node, but the network node is not limited thereto) . In the above description, a case is exemplified in which the number of network nodes other than the base station apparatus 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes .

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding information. For example, a radio resource may be indicated by an index.

The names used in the parameters described above are not a limited name in any respect. Further, expressions or the like using such parameters may be different from those explicitly disclosed in this disclosure. Various channels (for example, PUSCH, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station apparatus", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macrocell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication unit, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station apparatus in this disclosure may be replaced with the user terminal. For example, each aspect/embodiment of this disclosure may be applied to a configuration in which communication between the base station apparatus and the user terminal is replaced with communication in a plurality of user terminals 20 (for example, may be referred to as device-to-device (D2D), vehicle-to-everything (V2X), and the like). In this case, the function of the base station apparatus 10 described above may be provided in the user terminal 20. In addition, the words "up", "down", and the like may be replaced with words corresponding to the communication between the terminals (for example, "side") . For example, an up channel, a down channel, and the like may be replaced with a side channel.

Similarly, the user terminal in this disclosure may be replaced with the base station apparatus. In this case, the function of the user terminal described above may be provided in the base station apparatus.

The terms "determining" and "determining" used in this disclosure may involve diverse operations. "Determining" and "determining", for example, are capable of including "determining" and "determining" with respect to judging, calculating, computing, processing, deriving, investigating, looking up (search, inquiry) (for example, looking up in a table, a database, or another data structure), and ascertaining, and the like. In addition, "determining" and "determining" are capable of including "determining" and "determining" with respect to receiving (for example, receiving information), transmitting (for example, transmitting information), input, output, and accessing (for example, accessing data in a memory), and the like. In addition, "determining" and "determining" are capable of including "determining" and "determining" with respect to resolving, selecting, choosing, establishing, comparing, and the like. That is, "determining" and "determining" are capable of including "determining" and "determining" with respect to any operation. In addition, "determining (determining)" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical couple or connection, may be logical couple or connection, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot on the basis of a standard to be applied.

The description "on the basis of" that is used in this disclosure does not indicate "only on the basis of", unless otherwise specified. In other words, the description "on the basis of" indicates both "only on the basis of" and "at least on the basis of".

Any reference to elements using the designations "first," "second, " and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time unit greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time unit at the time of transmitting a signal. Other designations respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, unit representing TTI may be referred to as a slot, a mini slot, and the like, but not a subframe. Also, one slot may be called a unit time. The unit time may be different in each cell according to numerology.

Here, TTI, for example, indicates minimum time unit of scheduling in radio communication. For example, in an LTE system, the base station performs scheduling for allocating a radio resource (a frequency bandwidth, transmission power, and the like that can be used in each of the user terminals 20) in TTI unit, with respect to each of the terminals 20. Note that, the definition of TTI is not limited thereto.

TTI may be transmission time unit of a data packet (a transport block), a code block, a codeword, and the like that are subjected to channel coding, or may be processing unit of scheduling, link adaptation, and the like. Note that, when TTI is applied, a time zone in which the transport block, the code block, the codeword, and the like are actually mapped (for example, the number of symbols) may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a common TTI (TTI in LTE Rel.8-12), a normal TTI, a long TTI, a common subframe, a normal subframe, a long subframe, a slot, and the like. TTI shorter than the common TTI may be referred to as a shortened TTI, a short TTI, a partial TTI (or a fractional TTI), a shortened subframe, a short subframe, a mini slot, a subslot, a slot, and the like.

Note that, the long TTI (for example, the common TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined on the basis of the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a sub-carrier group (SCG), a resource element group (REG), a PRB pair, a RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In UE, one or a plurality of BWPs may be configured within one carrier.

At least one of the configured BWPs may be active, and it may not assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are in the plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

In the present disclosure, the SS block or CSI-RS is an example of a synchronization signal or reference signal.

As described above, this disclosure has been described in detail, but it is obvious for a person skilled in the art that this disclosure is not limited to the embodiment described in this disclosure. This disclosure can be implemented as corrected and changed modes without departing from the spirit and scope of this disclosure defined by the description of the claims. Therefore, the description in this disclosure is for illustrative purposes and does not have any limiting meaning with respect to this disclosure.

### [Description of Symbols]

- 10: BASE STATION APPARATUS
- 110: TRANSMISSION UNIT
- 120: RECEPTION UNIT
- 130: CONFIGURATION UNIT
- 140: CONTROL UNIT
- 20: USER TERMINAL
- 210: TRANSMISSION UNIT
- 220: RECEPTION UNIT
- 230: CONFIGURATION UNIT
- 240: CONTROL UNIT
- 1001: PROCESSOR
- 1002: STORAGE UNIT
- 1003: AUXILIARY STORAGE UNIT
- 1004: COMMUNICATION UNIT
- 1005: INPUT UNIT
- 1006: OUTPUT UNIT

## Claims

1. A terminal comprising:
a reception unit configured to receive configuration information for use in a random access procedure from a base station apparatus; and
a transmission unit configured to transmit information indicating an attribute of the terminal to the base station apparatus in the random access procedure based on the configuration information.

2. The terminal as claimed in claim 1,
wherein the transmission unit transmits the information indicating the attribute of the terminal to the base station apparatus by a preamble in the random access procedure or by a physical uplink shared channel.

3. The terminal as claimed in claim 2,
wherein, when the transmission unit transmits the information indicating the attribute by the preamble, the transmission unit transmits the preamble based on a correspondence relationship, indicated by the configuration information, between a resource for transmitting the preamble and the information indicating the attribute.

4. The terminal as claimed in any one of claims 1-3,
wherein the reception unit receives the information indicating the attribute by a response from the base station apparatus in the random access procedure.

5. The terminal as claimed in any one of claims 1-4,
wherein the attribute is an attribute indicating whether the terminal is a capability reduced terminal.

6. The terminal as claimed in any one of claims 1-5, further comprising:
a control unit configured to determine whether the terminal accesses a cell of the base station apparatus based on system information or a synchronization signal received from the base station apparatus by the reception unit.
